# EUROPÄISCHE PATENTSCHRIFT

(11) **EP 0 674 581 B1**
(45) Veröffentlichungstag und Bekanntmachung des Hinweises auf die Patenterteilung: **05.06.1996**
(21) Anmeldenummer: 94902600.9
(22) Anmeldetag: 08.12.1993
(51) Int. Cl.: B32B 5/24, D04H 13/00, B32B 7/02, B32B 31/08

(54) **MEHRSCHICHTIGES ELASTISCHES FLÄCHENGEBILDE SOWIE VERFAHREN ZUR HERSTELLUNG EINES MEHRSCHICHTIGEN ELASTISCHEN FLÄCHENGEBILDES**
MULTI-LAYER ELASTIC SURFACE PANEL AND PROCESS FOR PRODUCING IT
PANNEAU SUPERFICIEL ELASTIQUE A PLUSIEURS COUCHES ET SON PROCEDE DE FABRICATION

(30) Priorität: 18.12.1992 DE 4243012
(43) Veröffentlichungstag der Anmeldung: 04.10.1995
(73) Patentinhaber: Corovin GmbH, D-31224 Peine (DE); THE PROCTER & GAMBLE COMPANY, Cincinnati, Ohio 45202 (US)
(72) Erfinder: BOICH, Heinz-Horst, D-31224 Peine (DE); WEHRLE, Myrtha, D-31224 Peine (DE); TAMER, Attila, A., D-65824 Schwalbach am Taunus (DE); COLES, Peter, D-65779 Kelkheim (DE); SOON, See-Aun, D-65824 Schwalbach am Taunus (DE)
(74) Vertreter: Patentanwälte Thömen & Körner
(86) Internationale Anmeldenummer: DE9301177
(87) Internationale Veröffentlichungsnummer: WO9414607

(56) Entgegenhaltungen:
- EP-A- 0 217 032
- EP-A- 0 321 980
- US-A- 4 446 189
- US-A- 4 741 944
- US-A- 4 863 779
- US-A- 4 935 287

## Beschreibung

Die Erfindung betrifft ein mehrschichtiges elastisches Flächengebilde nach dem Oberbegriff des Anspruchs 1.

Ein derartiges mehrschichtiges elastisches Flächengebilde ist bereits aus der US-PS 4 446 189 bekannt. Das bekannte Flächengebilde umfaßt eine Schicht aus einem elastischen Material, z. B aus einem Polyurethan-Schaum oder aber auch aus einem Vollmaterial, die mit einer unelastischen Faser- oder Filamentschicht an zueinander beabstandeten Verbindungsstellen verbunden ist. Bei der Herstellung wird so vorgegangen, daß eine ursprünglich glatte Faser- oder Filamentschicht mit einer elastischen Schicht in derem entspannten Zustand durch einen Vernadelungsprozeß verbunden wird, anschließend das Verbundmaterial als Ganzes gestreckt und schließlich wieder entlastet wird. Dabei erfährt die unelastische Faser- oder Filamentschicht eine bleibende Dehnung und wellt sich nach der Entspannung zwischen den Verbindungsstellen mit der elastischen Schicht, während die elastische Schicht bis auf eine bleibende Restdehnung wieder weitgehend in die Ausgangslage zurückkehrt.

Ein weiteres mehrschichtiges elastisches Flächenelement ist aus der EP-PS 0 217 032 bekannt. Dieses Flächengebilde unterscheidet sich im Herstellungsverfahren von dem vorerwähnten dadurch, daß eine verstreckte unelastische Faser- oder Filamentschicht verwendet wird und diese mit einer gedehnten elastischen Schicht an beabstandeten Verbindungsstellen verbunden und anschließend das gesamte Flächengebilde entspannt wird. Auch dabei wellt sich dann die unelastische Faser- oder Filamentschicht zwischen den Verbindungspunkten. Die elastische Schicht ist aus einer gewebten, elastischen Faserbahn gebildet.

Die bekannten mehrschichtigen elastischen Flächengebilde haben den entscheidenden Nachteil, daß sie auf ihrer ganzen Fläche unkontrolliert flüssigkeitsdurchlässig sind. Dies ist bei dem Flächengebilde der EP-PS 0 217 032 ohne weiteres einsichtig, da hier ja auschließlich faserige Schichten verwendet werden.

Aber auch bei dem Flächengebilde nach der US-PS 4 446 189 in der Alternative der aus Vollmaterial bestehenden elastischen Schicht tritt Flüssigkeitsdurchlässigkeit auf. Diese ist hier durch den Vernadelungsprozeß bedingt. Beim Vernadeln werden die Fasern oder Filamente der unelastischen Schicht mittels Nadeln mit der elastischen Schicht aus Vollmaterial vernäht. Die Nadeln durchstechen die elastische Schicht und nehmen auf ihrem Weg einzelne Fasern oder Filamente mit, die beim Rückweg der Nadeln aber in den gebildeten Löchern verbleiben. Die auf diese Weise erfolgte Verbindung der elastischen Schicht mit der nichtelastischen Schicht ist kraftschlüssig. Die Fasern oder Filamente können also bei mechanischer Beanspruchung auch wieder aus den Löchern der elastischen Schicht herausgezogen werden und dieser Effekt tritt beim Verdehnen des Flächengebildes auch tatsächlich auf.

Selbst wenn man unterstellt, daß die durch den Vernadelungsprozeß hervorgerufene Beschädigung der elastischen Schicht noch nicht zu einer wesentlichen Erhöhung der Flüssigkeitsdurchlässigkeit führt, da die beim Vernadeln entstandenen Löcher ja wieder weitgegend von den durchgestoßenen Fasern verstopft werden, so werden die Löcher beim Verdehnen des Flächengebildes durch Herausrutschen der Fasern wieder geöffnet. und lassen Flüssigkeit unkontrolliert hindurchtreten. Darüberhinaus lassen sich die Fasern beim Verdehnen des Flächengebildes nicht wesentlich strecken, jedenfalls keineswegs bis an den Bereich ihrer Dehnungsbruchfestigkeit. Vielmehr rutschen sie bei zunehmender Dehnungskraft vorher aus den Löchern der elastischen Schicht heraus. Dies führt nur zu einer geringfügigen Zunahme des von der Faser- oder Filamentschicht nach dem Verdehnen und anschließenden Entspannen des Flächengebildes eingenommen Volumen im Vergleich zu dem Volumen vor dem Verdehnen und Entspannen.

Ein weiterer Nachteil der Vernadelungstechnologie besteht darin, daß sich nur faserige Schichten mit relativ kurzen Fasern, vorzugsweise Stapelfasern, zum Vernadeln eignen, weil sich nur die kurzen Fasern problemlos aus dem horizontalen Verbund aneinander vorbeigleitend in den vertikalen Verbund durch die elastische Schicht hindurch umlagern lassen. Lange Fasern in Spinnvliesen oder schmelzgeblasenen Vliesen hingegen sind sich selbst im Wege, da sie über eine größere Länge von anliegenden Fasen gehalten werden und sich somit nicht frei verschieben lassen. Die Einschränkung auf kurze Fasern hat wegen der Herstellungstechnologie von kurzen Fasern aber die Konsequenz, daß nur Fasern mit relativ großem Durchmesser verwendet werden können. Zur Erzielung einer bestimmten Homogenität und Dicke der Schicht aus den Fasern oder Filamenten ist daher ein relativ großer Materialbedarf erforderlich. Bei dem bekannten Flächengebilde ist es daher nicht möglich, ein anteiliges Flächengewicht der Faser- oder Filamentschicht unter 15 g/m² zu erreichen.

Schließlich ist aus der EP-A-0 321 980 ein mehrschichtiges elastisches Flächenelement bekannt, das ähnlich dem in der ober erwähnten EP-A 0 217 032 beschriebenen Flächengebilde eine unelastische Faser- oder Filamentschicht und eine elastische Schicht umfaßt. Die unelastische Schicht wird mit der gedehnten elastischen Schicht an beabstandeten Verbindungsstellen verbunden und anschließend das gesamte Flächengebilde entspannt. Auch dabei wellt sich dann die unelastische Faser- oder Filamentschicht zwischen den Verbindungspunkten. Die unelastische Faser- oder Filamentschicht wird nicht verstreckt. Neben der Möglichkeit, die elastische Schicht als gewebte, elastische Faserbahn auszubilden, offenbart die EP-A-0 321 980 auch eine Ausführungsform, bei der die elastische Schicht ein Film ist.

Als Bestandteil von Windeln sind sie die bekannten Materialien ungeeignet, da es bei diesem Produkt ja darauf ankommt, einerseits den Übertritt von Körperflüssigkeit auf Kleidungsstücke zu verhindern, zum anderen aber auch eine materialsparende und kostengünstige Herstellung zu ermöglichen.

Der Erfindung liegt deshalb die Aufgabe zugrunde, ein mehrschichtiges elastisches Flächengebilde dahingehend zu verbessern, das eine vollständige Flüssigkeitsundurchlässigkeit oder eine kontrollierte Flüssigkeitsdurchlässigkeit erreichbar ist und gleichzeitig eine großvolumige textile Oberfläche bei geringem Materialeinsatz geschaffen wird.

Diese Aufgabe wird bei einem mehrschichtigen elastischen Flächengebilde durch die im kennzeichnenden Teil des Patentanspruchs 1 angegebenen Merkmale gelöst.

Durch die Verwendung eines Films oder einer Folie als elastische Schicht werden die elastischen und die flüssigkeitssperrenden Eigenschaften in einer Schicht vereinigt. Dies wirkt sich günstig auf ein möglichst geringes Gewicht und eine möglichst geringe Dicke des Materials aus. Der geringen Dicke des Materials kommt insofern große Bedeutung zu, als daß der Widerstand gegen Biegen und Knicken verringert wird. Da die nichtelastische Faser- oder Filamentschicht im entspannten Zustand ja in Falten liegt, beeinträchtigt sie den Widerstand gegen Biegen und Knicken sowie Dehnung in keiner Weise. Es können also auch kleine Biegeradien erzeugt werden, ohne daß das Material bestrebt ist, wieder in seine ebene Ausgangslage zurückzufedern. Dadurch ist gerade bei der Anwendung für Windeln eine gute Anpassung und Anschmiegung an unterschiedliche Körperpartien möglich.

Durch die unelastische Faser- oder Filamentschicht wird ein textiler Charakter erzeugt, der verhindert, daß die elastische Folie oder der elastische Film unmittelbar Körperkontakt erhält.

Durch das Verschmelzen oder Verkleben der unelastischen Faser- oder Filamentschicht mit der gummielastischen Schicht erfährt die gummielastische Schicht keine mechanische Beschädigung. Ihre ursprüngliche flüssigkeitsundurchlässige Eigenschaft wird dadurch nicht beeinträchtigt. Weiterhin werden die Schichten beim Verschmelzen oder Verkleben im Falle des Verschmelzens formschlüssig und im Falle des Verklebens kraftschlüssig mit sehr hoher Haftkraft mit einander verbunden. Bei der gemeinsamen Dehnung des Flächengebildes werden sich die Fasern oder Filamente daher nicht an den Verbindungsstellen lösen können, sondern sie werden um den Betrag verstreckt, um den das Flächengebilde gedehnt wird. Dabei kommt es durch die Faltenlegung beim anschließenden Entspannen des Flächengebildes zu einer Volumenvergrößerung der unelastischen Faser- oder Filamentschicht etwa um den Wert, um den das Flächengebilde gegenüber seiner Ausgangslage verdehnt wurde.

Besonders vorteilhaft ist ferner, daß für die Herstellung der unelastischen Faser- oder Filamentschicht alle Vliesbildungstechnologien uneingeschränkt verwendet werden können. Es lassen sich also auch sehr dünne, lange Fasern einsetzen, wodurch der Volumengewinn der unelastischen Faser- oder Filamentschicht im Vergleich zum eingesetzten Materialvolumen sehr hoch wird.

Dies führt nicht nur zu einer weichen, flauschigen Oberfläche, die in Verbindung mit Windeln besonders hautfreundlich ist, sondern auch zu einer großen Saug- und Aufnahmefähigkeit für Flüssigkeit. Damit eignet sich die unelastische Faser- oder Filamentschicht also auch als primärer Zwischenspeicher für Flüssigkeit. Bei Anwendung in Windeln ist diese Eigenschaft besonders vorteilhaft auszunutzen, damit die schubweise abgegebenen Harnmengen nicht aus der Windel herauslaufen können, ehe sie von der Endspeicherschicht aufgesaugt und chemisch gebunden werden. In diesem Fall wird das Flächengebilde natürlich nicht flüssigkeitsundurchlässig belassen sondern durch die Anbringung von Perforationslöchern so ausgestaltet, daß nach einer Harnabgabe die in der Faser- oder Filamentschicht zwischengespeicherte Flüssigkeit durch die perforierte gummielastische Schicht zur Endspeicherschicht kontrolliert durchtreten kann.

Im Gegensatz zum Stand der Technik ermöglicht die ursprünglich flüssigkeitsdichte, gummielastische Schicht durch Anbringung von Perforationen die Schaffung einer kontrollierten Flüssigkeitsdurchlässigkeit. Die Flüssigkeitsdurchlässigkeit ist also nicht durch zufällig im Rahmen einer Vernadelung entstandene mechanischen Beschädigungen gegeben.

Die Perforationen in der gummielastischen Schicht können auch partiell angeordnet sein und darüber hinaus eine ungleichmäßige Dichte und/oder Weite ihrer Perforationsöffnungen aufweisen. So kann z.B. bei einer Windel in der Mitte eine besonders hohe Dichte und Weite der Perforationsöffnungen angeordnet werden, um dort den Flüssigkeitsdurchtritt zu erleichtern, während zu den Rändern hin die Dichte und Weite der Perforationsöffnungen abnimmt oder an diesen Stellen gar keine Perforationsöffnungen vorhanden sind, damit die Flüssigkeit, solange sie chemisch noch nicht gebunden ist, in diesen Bereichen nicht wieder in umgekehrter Richtung durch die Folie austreten und nach außen gelangen kann.

Als geeignetes Material für die Fasern oder Filamente der unelastischen Faser- oder Filamentschicht eignen sich Endlosfasern, die mit Hilfe eines Schmelzspinnverfahrens als Spinnvlies hergestellt werden können oder endlich lange Mikrofasern, die sich als Schmelzblasvlies im Rahmen eines Schmelzblasverfahrens darstellen lassen.

Mit dem letztgenannten Verfahren können besonders dünne Fasern von weniger als 0,1 detex erzeugt werden und diese Fasern lassen sich auch in einer sehr geringen Schichtdicke anordnen, da sie bei der Herstellung mit der gummielastischen Schicht verbunden und dann gemeinsam mit dieser weiterverarbeit werden können. Schmelzblasvliese mit einer Schichtdicke, die optisch gerade noch einen homogenen Aufbau erkennen läßt, lassen sich einzeln nämlich nicht mehr handhaben. Durch die Verbindung mit der gummielastischen Schicht ist es aber möglich, den Materialeinsatz so zu begrenzen, daß der Anteil der unelastischen Faser- oder Filamentschicht nur eine Flächengewicht zwischen 2 und 10 g/m² aufweist. Trotz des geringen Materialeinsatzes entsteht aufgrund der Streckung und Faltenbildung nach der Entspannung des Flächengebildes aber eine großvolumige textile Schicht.

Die elastischen Eigenschaften lassen sich wahlweise eindimensional oder zweidimensional ausbilden, wobei die eindimensionale Ausbildung besonders einfach zu realisieren ist, da das Flächengebilde lediglich in Bewegungsrichtung der Bahn verstreckt werden muß.

Bei einer bevorzugten Ausgestaltung dient als unelastische Faser- oder Filamentschicht ein Material, das eine bleibende Dehnung von wenigstens 150 % bezogen auf die Ausgangslänge aufweist und eine gummielastische Schicht mit einer Bruchdehnung von wenigstens 150 %, vorzugsweise im Bereich zwischen 250 % und 500 %, bezogen auf die Ausgangslänge. In der späteren Handhabung ist das Material dann mechanisch besonders widerstandsfähig, da bei Dehnung bereits weit vor Erreichen der Bruchdehnung der gummielastischen Schicht die unelastische Faser- oder Filamentschicht eine weitere Dehnung unterbinden und somit eine Zerstörung durch Einreißen des Flächengebildes verhindert.

Die Erfindung betrifft ferner ein Verfahren zur Herstellung eines mehrschichtigen elastischen Flächengebildes nach dem Oberbegriff des Patentanspruchs 13.

Diesbezüglich liegt ihr die Aufgabe zugrunde, ein Verfahren zur Herstellung eines mehrschichtigen elastischen Flächengebildes anzugeben, welches eine vollständige Flüssigkeitsundurchlässigkeit oder eine kontrolliert Flüssigkeitsdurchlässigkeit besitzt und gleichzeitig eine großvolumige textile Oberfläche bei geringem Materialeinsatz schafft.

Diese Aufgabe wird bei einem Verfahren nach dem Oberbegriff des Anspruchs 12 durch die im Kennzeichen angegebenen Merkmale gelöst.

Zweckmäßig wird das Flächengebilde in unmittelbar aufeinander folgenden Verfahrensschritten hergestellt. Die nichtelastische Faser- oder Filamentschicht kann dabei nach dem Schmelzspinnverfahren oder dem Schmelzblasverfahren auf einer Vlieslegevorrichtung gebildet werden. Auf die auf dem Legeband befindliche und mit diesem weitertransportierte Vliesschicht wird dann die gummielastische Schicht aufgelegt. Dabei kann die gummielastische Schicht entweder simultan gefertigt oder auch vorgefertigt sein und von einer Rolle abarbeitend der Vliesschicht zugeführt werden. In einem nachfolgenden Verfahrensschritt werden dann die auf dem Legeband befindlichen Schichten, nämlich die nichtelastische Faser- oder Filamentschicht und die gummielastische Schicht miteinander an den vorgesehenen Verbindungsstellen miteinander verbunden, z.B. durch Kalanderwalzen. Anschließend wird das Flächengebilde bis zur Bruchdehnungsgrenze der Fasern oder Filamente der unelastischen Faser- oder Filamentschicht gedehnt und anschießend wieder entspannt, worauf es bis auf eine bleibende Dehnung wieder in die Ausgangslage zurückkehrt und sich die unelastische Faser- oder Filamentschicht in Falten legt.

Wenn die Verbindung durch Verschmelzen erfolgt, werden die unelastische Faser- oder Filamentschicht und die gummielastische Schicht unmittelbar aufeinander gelegt und druck- und temperaturbeaufschlagt.

Im Falle einer Klebung wird entweder die nichtelastische Faser- oder Filamentschicht oder die gummielastische Schicht mit einer durch Druck und/oder Erwärmung aktivierbaren Kleberschicht versehen, bevor die beiden Komponenten des Flächengebildes aufeinander gelegt und an den vorgesehenen Verbindungsstellen verbunden werden.

Besonders vorteilhaft ist es, die Verbindung unmittelbar nach Herstellung des Vlieses und der gummielalstischen Schicht durchzuführen, da bei der Verbindung dann nur eine Druckbeaufschlagung erforderlich ist und die Restwärme des Herstellungsprozesses der unelastischen Faser- oder Filamentschicht und/oder der gummielastischen Schicht ausgenutzt werden kann.

Weiterbildungen und vorteihafte Ausgestaltungen der Erfindung ergeben sich aus den Ansprüchen, der weiteren Beschreibung und der Zeichnung, anhand der die Erfindung näher erläutert wird.

In der Zeichnung zeigen:
- Fig. 1: zeigt einen Schnitt durch ein mehrschichtiges elastisches Flächengebilde im zunächst ungedehnten Zustand,
- Fig. 2: einen Schnitt im gedehnten Zustand,
- Fig. 3: einen Schnitt im entspannten Zustand,
- Fig. 4: eine Vorrichtung einer ersten Ausgestaltung zur Herstellung eines mehrschichtigen Flächengebildes und
- Fig. 5: eine weitere Alternative einer Vorrichtung zur Herstellung des mehrschichtigen Flächengebildes und
- Fig. 6: als Teil einer Vorrichtung einen Streckrahmen.

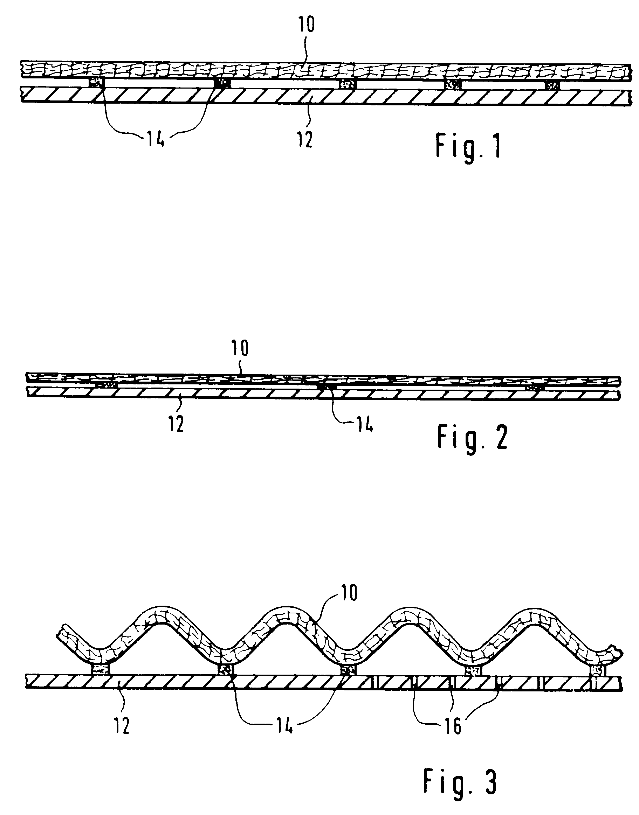

Fig. 1 zeigt einen Schnitt durch ein ursprünglich ungedehntes mehrschichtiges elastisches Flächengebilde aus einer nichtelastischen Faser- oder Filamentschicht 10, und einer gummielastischen, aus einer homogenen Folie oder einem homogenen Film bestehenden Schicht 12. Die beiden Schichten 10 und 12 sind an voneinander beabstandeten Verbindungsstellen 14 miteinander verbunden. Die Verbindung kann durch Verschmelzen oder durch Verkleben mittels einer zwischen die beiden Schichten 10 und 12 eingebrachten Kleberschicht gebildet sein. Bei einer Verschmelzung besteht eine formschlüssige Verbindung, während im Falle eines Verklebens eine kraftschlüssige Verbindung besteht, die allerdings extrem hohe Bindungskräfte entwickeln kann.

Fig. 2 zeigt das mehrschichtige Flächengebilde im gedehnten Zustand. Dabei sind die Fasern oder Filamente der nichtelastischen Faser- oder Filamentschicht 10 bis in die Nähe ihrer Bruchdehnungsgrenze gestreckt.

Fig. 3 zeigt einen Schnitt durch das elastische Flächengebilde nach der Entspannung. In diesem Fall ist die gummielastische Schicht 12 bis auf eine bleibende Dehnung von etwa 20% wieder in ihre Ausgangslage zurückgekehrt, während sich die nichtelastische Faser- oder Filamentschicht 10 nach Art einer Zieharmonika zwischen den beabstandeten Verbindungspunkten 14 in Falten gelegt hat. Die lichte Höhe der Schichtdicke der nichtelastischen Faser- oder Filamentschicht 10 ist dadurch angewachsen und dies wirkt sich sowohl im flauschigen textilen Griff als auch in der Aufnahmefähigkeit für Flüssigkeit günstig aus.

In Fig. 3 ist außerdem noch einer Perforierung 16 in der gummielalstischen Schicht 12 eingezeichnet, die wahlweise dann vorgenommen werden kann, wenn das mehrschichtige Flächengebilde kontrolliert flüssigkeitsdurchlässig ausgebildet sein soll. Bei der Perforierung läßt sich die Dichte und Weite der Perforationsöffnungen 16 gezielt vorgeben, so daß von einer kontrollierten Flüssigkeitsdurchlässigkeit gesprochen werden kann. Bei einer gummielastischen Schicht, die z.B. durch einen Vernadelungsprozeß mechanisch beschädigt wurde, hat man dagegen keinen Einfluß auf die Flüssigkeitsdurchlässigkeit. In dem Fall kann daher nur von einer unkontrollierten Flüssigkeitsdurchlässigkeit gesprochen werden.

Besonders vorteilhaft sind die flüssikeitsspeichernden Eigenschaften der nichtelastischen Faser- oder Filamentschicht 10 und die kontrolliert flüssigkeitsdurchlässigen Eigenschaften der elastischen Schicht 12 bei der Anwendung in Windeln. Das mehrschichtige Flächengebilde kann nämlich den zum Körper weisenden Abschluß der mit Wattefasern und chemischen Bindungsmitteln versehenen Endspeicherschicht bilden. Dabei lassen sich schubweise abgegebene Harnmengen zunächst in der großvolumigen nichtelastischen Faser- oder Filamentschicht 10 zwischenspeichern und die zwischengespeicherte Flüssigkeit dann anschließend langsam über die Perforationsöffnungen nach Art einer Dränage in die darunter liegende Watteschicht abführen und dort chemisch binden. Ein Rückfließen noch nicht chemisch gebundener Flüssigkeit wird dadurch verhindert oder zumindest erschwert, daß die unter den Falten der Faser- oder Filamentschicht gebildeten Hohlräume keine Kapillarwirkung entwickeln und damit die Flüssigkeit nicht mehr gegen die Schwerkraft von unten durch die Perforationsöffnungen der gummielastischen Schicht zurückholen können.

Es läßt sich so ein Flächengebilde schaffen, das nur in einer Richtung flüssigkeitsdurchlässig ist, in der anderen Richtung hingegen den Flüssigkeitsdurchtritt sperrt.

In der Ausgestaltung als nichtperforierte gummielastische Schicht kann das Flächengebilde die außenliegende, also zur Kleidung hin weisende Abschlußfläche der Windel bilden. Das Flächengebilde ist hier vollkommen flüssigkeitsundurchlässig, besitzt jedoch angenehme textile Eigenschaften. Bei grundsätzlich indentischen Materialien können somit die gewünschten Eigenschaften allein durch Perforation oder Nichtperforation der gummielastischen Schicht erzielt werden.

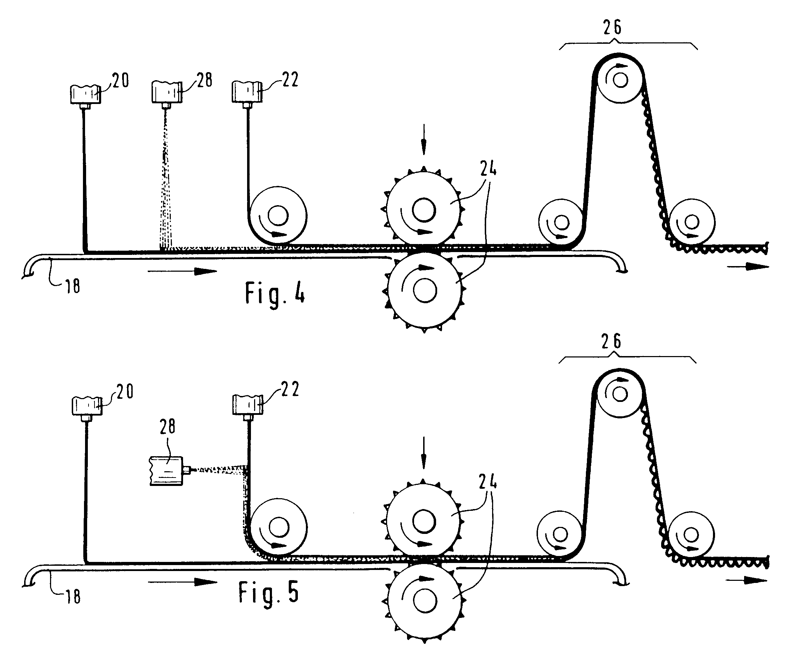

Die Figuren 4 und 5 zeigen Vorrichtungen zur Herstellung eines mehrschichtigen elastischen Flächengebildes. Auf dem Legeband 18 einer Legevorrichtung wird zunächst ein Vlies hergestellt, das alternativ nach dem Spinnvliesverfahren oder dem Schmelzblasverfahren gebildet sein kann. Dazu befindet sich oberhalb des Legebandes 18 eine Düsenvorrichtung 20 für die austretende Schmelze, die im Falle einer Spinnvorrichtung als Spinnbalken oder im Falle einer Schmelzblasvorrichtung als Anordnung von Schmelzblasdüsen ausgebildet sein kann.

In Transportrichtung im Abstand von der Düsenanordnung 20 wird eine gummielastische Folie hergestellt. Schematisch dargestellt ist hierzu eine Düse 22, aus der das Folienmaterial austritt. Alternativ könnte aber auch eine in einem externen Fertigungsprozeß hergestellte Folie von einer Rolle abgewickelt und dem Legeband 18 zugeführt werden.

Weiter in Transportrichtung des Legebandes 18 befinden sich Kalanderwalzen 24, mit deren Hilfe die aufeinander liegenden Schichten an ausgewählten Verbindungsstellen verbunden werden.

Dem schließt sich wiederum in Transportrichtung eine Dehnungsvorrichtung 26 an, bei der das Flächengebilde mit erhöhter Transportgeschwindigkeit bewegt wird, so daß eine Verstreckung erfolgt. Anschließend wird dieser Vorgang wieder rückgängig gemacht, so daß sich das Flächengebilde auf etwa seine ursprünglichen Abmessungen entspannt.

Zur Schaffung einer Adhaesivkleberschicht befindet sich zwischen der Position der Spinn- bzw. Schmelzblasdüsen 20 und der Vorrichtung 22 zur Erzeugung oder Zuführung der gummielastischen Schicht eine Düsenanordnung 28 zur Erzeugung einer Adhaesivkleberschicht. Diese Vorrichtung kann natürlich entfallen, wenn die Verbindung zwischen der unelastischen Faser- oder Filamentschicht mit der gummielastischen Schicht durch Verschmelzen erfolgt.

Fig. 4 zeigt die Alternative, bei der die Kleberschicht auf die unelastische Faser- oder Filamentschicht aufgebracht wird und Fig. 5 die zweite Alternative, bei der die Kleberschicht auf die der unelastischen Faser- oder Filamentschicht zugewandte Seite des Films oder der Folie, also der gummielastischen Schicht aufgebracht wird.

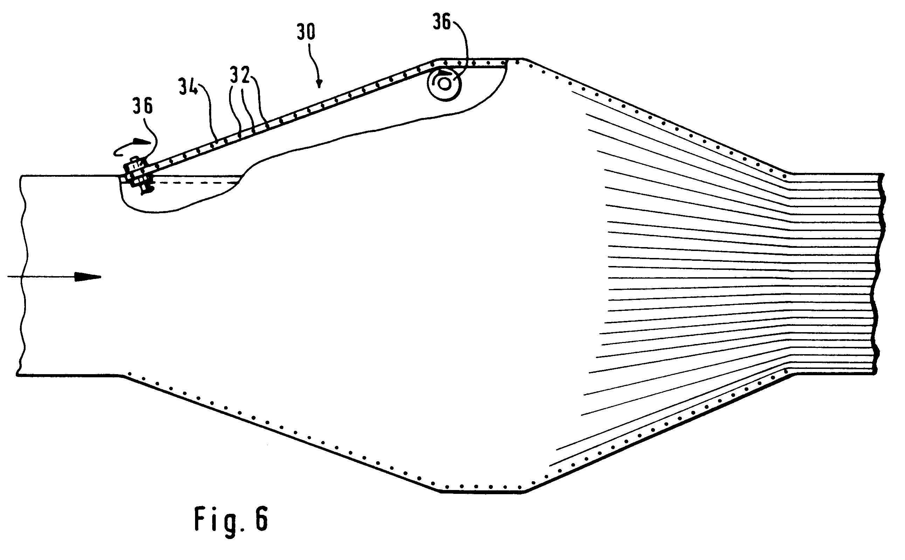

Fig. 6 zeigt schließlich einen Streckrahmen 30, mit dem eine Dehnung quer zur Bahnrichtung vorgenommen werden kann. Soweit nur eine eindimensionale Dehnung quer zur Bahnrichtung erwünscht ist, kann der Streckrahmen 30 anstelle der Dehnungsvorrichtung 26 eingesetzt werde. Für eine zweidimensionale Dehnung, nämlich sowohl in Bahnrichtung als auch quer dazu, wird der Streckrahmen 30 zusätzlich benötigt und entweder vor oder hinter der Dehnungsvorrichtung 26 angeordnet.

Der Streckrahmen 30 umfaßt zwei mit Mitnehmern 32 besetzte Endlosgurte 34, die über Führungsrollen 36 laufen und einen Weg beschreiben, der von den Außenseiten eines ungestreckten bahnförmigen Flächengebildes ausgehend zuerst schräg nach außen von der Bahnmittelachse weg führt, anschließend kurz parallel zur Bahnmittelachse verläuft und schließlich wieder einwärts führt, bis der Anfangsabstand von der Bahnmittelachse erreicht ist. Die Mitnehmer 32 greifen das bahnförmige Flächengebilde außen an, so daß es beim Weitertransport aufgrund des Weges der Endlosgurte 34 zuerst gedehnt und anschließend wieder entspannt wird.

## Patentansprüche

1. Mehrschichtiges elastisches Flächengebilde aus wenigstens einer gummielastischen Schicht aus einem homogenen Film oder einer homogenen Folie und wenigstens einer mit der gummielastischen Schicht an zueinander beabstandeten Verbindungsstellen verbundenen unelastischen Faser- oder Filamentschicht, die im entspannten oder teilweise gespannten Zustand der gummielastischen Schicht zwischen den Verbindungsstellen in Falten gelegt und im vollständig gespannten Zustand der gummielastischen Schicht glatt ist, dadurch gekennzeichnet, daß die unelastische Faser- oder Filamentschicht aus einem ursprünglich glatten, nicht- oder teilverstreckten Material aus Endlosfasern oder endlich langen Mikrofasern besteht, das an den Verbindungsstellen mit der entspannten gummielastischen Schicht verschmolzen oder verklebt ist und daß das Flächengebilde bis in die Nähe der Bruchdehnungsgrenze der Fasern- oder Filamente gedehnt wird.

2. Mehrschichtiges elastisches Flächengebilde nach Anspruch 1, dadurch gekennzeichnet, daß die gummielastische Schicht über ihrer ganzen Fläche perforiert ist.

3. Mehrschichtiges elastisches Flächengebilde nach Anspruch 1, dadurch gekennzeichnet, daß die gummielastische Schicht partiell perforiert ist.

4. Mehrschichtiges elastisches Flächengebilde nach Anspruch 2 oder 3, dadurch gekennzeichnet, daß die gummielastische Schicht über ihrer ganzen oder partiellen Fläche eine ungleichmäßige Dichte und/oder Weite der Perforationsöffnungen aufweist.

5. Mehrschichtiges elastisches Flächengebilde nach einem oder mehreren der Ansprüche 1 bis 4, dadurch gekennzeichnet, daß die unelastische Faser- oder Filamentschicht aus Endlosfasern besteht.

6. Mehrschichtiges elastisches Flächengebilde nach einem oder mehreren der Ansprüche 1 bis 4, dadurch gekennzeichnet, daß die unelastische Faser- oder Filamentschicht aus endlich langen Mikrofasern besteht, deren Länge ein Mehrfaches des Abstandes zweier unmittelbar benachbarter Verbindungsstellen beträgt und deren Flächengewicht im Bereich von vorzugweise 2 bis 10 g/m² liegt.

7. Mehrschichtiges elastisches Flächengebilde nach einem oder mehreren der Ansprüche 1 bis 4, dadurch gekennzeichnet, daß die unelastische Faser- oder Filamentschicht aus endlich langen Stapelfasern einer Länge im Bereich zwischen 20 und 100 mm besteht.

8. Mehrschichtiges elastisches Flächengebilde nach einem oder mehreren der Ansprüche 1 bis 7, dadurch gekennzeichnet, daß die gummielastische Schicht und/oder die unelastische Faser- oder Filamentschicht eine durch Druckbeaufschlagung oder Erwärmung aktivierbare Adhäsivkleberschicht trägt, die and den zueinander beabstandeten Verbindungsstellen eine kraftschlüssige Verbindung zwischen der gummielastischen Schicht und der unelastischen Faser- oder Filamentschicht bildet.

9. Mehrschichtiges elastisches Flächengebilde nach Anspruch 8, dadurch gekennzeichnet, daß die Adhäsivkleberschicht einen Anteil mit faseriger Struktur aufweist.

10. Mehrschichtiges elastisches Flächengebilde nach einem oder mehreren der Ansprüche 1 bis 9, dadurch gekennzeichnet, daß die elastischen Eigenschaften ein- oder zweidimensional ausgebildet sind.

11. Mehrschichtiges elastisches Flächengebilde nach Anspruch 10, dadurch gekennzeichnet, daß bei einem bahnförmigen Flächengebilde mit eindimensional ausgebildeten elastischen Eigenschaften die Elastizität quer zur Bahnrichtung ausgerichtet ist.

12. Mehrschichtiges elastisches Flächengebilde nach einem oder mehreren der Ansprüche 1 bis 11, dadurch gekennzeichnet, daß die unelastische Faser- oder Filamentschicht eine bleibende Dehnung von wenigstens 150 % bezogen auf die Ausgangslänge aufweist und die gummielastische Schicht eine bleibende Dehnung von maximal 20 % nach einer ersten Dehnung und eine Bruchdehnung von wenigstens 150 % vorzugsweise zwischen 250 % und 500 % jeweils bezogen auf die Ausgangslänge aufweist.

13. Verfahren zur Herstellung eines mehrschichtigen elastischen Flächengebildes aus wenigstens einer gummielastischen Schicht aus einem homogenen Film oder einer homogenen Folie und wenigstens einer mit der gummielastischen Schicht an zueinander beabstandeten Verbindungsstellen verbundenen unelastischen Faser- oder Filamentschicht, wobei die gummielastische Schicht im entspannten Zustand und die unelastische Faser- oder Filamentschicht aus einem nicht- oder teilverstreckten Material zuerst flach aufeinandergelegt wird, dadurch gekennzeichnet, daß die gummielastische Schicht und die unelastische Faser- oder Filamentschicht, welche aus Endlosfasern oder endlich langen Mikrofasern besteht, dann an den zueinander beabstandeten Verbindungsstellen verschmolzen oder verklebt werden, anschließend gemeinsam bis in die Nähe der Bruchdehnungsgrenze der Fasern oder Filamente der unelastische Faser- oder Filamentschicht gedehnt und schließlich wieder entspannt werden.

14. Verfahren nach Anspruch 13, dadurch gekennzeichnet, daß die gummielastische Schicht über ihrer ganzen Fläche oder partiell perforiert wird.

15. Verfahren nach Anspruch 13 oder 14, dadurch gekennzeichnet, daß auf einem Legeband einer Schmelzspinn- oder einer Schmelzblasanlage zunächst eine Faser- oder Filamentschicht hergestellt wird, daß anschließend eine in einem simultanen oder gesonderten Prozeß hergestellte gummielastische Schicht zugeführt, auf die auf dem Legeband der Schmelzspinn- oder Schmelzblasanlage transportierte Faser- oder Filamentschicht aufgelegt und zusammen mit dieser an ausgewählten Verbindungsstellen zu einem mehrschichtigen Flächengebilde verschmolzen oder verklebt wird, und daß das Flächengebilde danach entweder quer zur Transportrichtung oder in Transportrichtung oder sowohl quer zur Transportrichtung als auch in Transportrichtung bis in die Nähe der Bruchdehnungsgrenze der Fasern oder Filamente der unelastische Faser- oder Filamentschicht gedehnt und schließlich wieder entspannt wird.

16. Verfahren nach Anspruch 15, dadurch gekennzeichnet, daß auf die auf dem Legeband der Schmelzspinn- oder Schmelzblasanlage transportierte Faser- oder Filamentschicht oder auf die für den Kontakt mit der Faser- oder Filamentschicht vorgesehene gummielastische Schicht vor dem Zusammenführen der Schichten eine durch Druckbeaufschlagung oder Erwärmung aktivierbare Adhäsivkleberschicht aufgebracht wird.

17. Verfahren nach Anspruche 15 oder 16, dadurch gekennzeichnet, daß die Verbindung der gummielastischen Schicht mit der unelastischen Faser- oder Filamentschicht an den ausgewählten Verbindungsstellen durch Verschmelzen oder Aktivieren einer Kleberschicht durch Druckbeaufschlagung unter Ausnutzung der bei den Herstellungsprozessen der gummielastischen Schicht und/oder der unelastischen Faser- oder Filamentschicht entstandenen Restwärme vorgenommen wird.

18. Verfahren nach einem oder mehreren der Ansprüche 13 bis 17, dadurch gekennzeichnet, daß die unelastische Faser- oder Filamentschicht und die gummielastische Schicht gemeinsam bis zwischen 100 % und 250 % ihrer Ausgangslänge gedehnt werden.

## Claims

1. Multilayer elastic areal structure of at least one rubber-elastic layer of a homogeneous film or a homogeneous foil and at least one inelastic fibre layer or filament layer connected to the rubber-elastic layer at spaced apart connection points, which fibre or filament layer, in the unstressed or partly stressed state of the rubber-elastic layer, is laid in folds between the connecting points and, in the completely stressed state of the rubber-elastic layer, is smooth, characterized in that the inelastic fibre or filament layer consists of an originally smooth, non-stretched or partly stretched material of endless fibres or of microfibres of finite length, which is fused or glued at the connection points to the unstressed rubber-elastic layer and that the areal structure is strained into the vicinity of the breaking elongation of the fibres or filaments.

2. Multilayer elastic areal structure according to Claim 1, characterized in that the rubber-elastic layer is perforated over its entire area.

3. Multilayer elastic areal structure according to Claim 1, characterized in that the rubber-elastic layer is partly perforated.

4. Multilayer elastic areal structure according to Claim 2 or 3, characterized in that the rubber-elastic layer has a non-uniform density and/or width of the perforation openings over its entire area or part of the area.

5. Multilayer elastic areal structure according to one or more of Claims 1 to 4, characterized in that the inelastic fibre or filament layer consists of endless fibres.

6. Multilayer elastic areal structure according to one or more of Claims 1 to 4, characterized in that the inelastic fibre or filament layer consists of microfibres of finite length, the length of which is a multiple of the distance between two immediately adjacent connection points and the weight per unit area of which lies in the range of preferably 2 to 10 g/m².

7. Multilayer elastic areal structure according to one or more of Claims 1 to 4, characterized in that the inelastic fibre or filament layer consists of staple fibres of finite length having a length in the range between 20 and 100 mm.

8. Multilayer elastic areal structure according to one or more of Claims 1 to 7, characterized in that the rubber-elastic layer and/or the inelastic fibre or filament layer carries an adhesive coating that can be activated by action of pressure or heat, which forms, at the spaced apart connection points, a force-transmitting connection between the rubber-elastic layer and the inelastic fibre or filament layer.

9. Multilayer elastic areal structure according to Claim 8, characterized in that the adhesive coating comprises a constituent having a fibrous structure.

10. Multilayer elastic areal structure according to one or more of Claims 1 to 9, characterized in that the elastic properties are one-dimensional or two-dimensional.

11. Multilayer elastic areal structure according to Claim 10, characterized in that, in the case of a web-like areal structure with unidimensional elastic properties, the elasticity is orientated transversely to the direction of the web.

12. Multilayer elastic areal structure according to one or more of Claims 1 to 11, characterized in that the inelastic fibre or filament layer has a permanent strain of at least 150% relative to the initial length and the rubber-elastic layer exhibits a permanent strain of at most 20% after a first strain and a breaking elongation of at least 150%, preferably between 250% and 500%, each related to the initial length.

13. Method of making a multilayer elastic areal structure of at least one rubber-elastic layer of a homogeneous film or homogeneous foil and at least one inelastic fibre or filament layer, connected to the rubber-elastic layer at mutually spaced apart connection points, wherein the rubber-elastic layer, in the unstressed state, and the inelastic fibre or filament layer of a non-stretched or partly stretched material are first laid flat upon one another, characterized in that the rubber-elastic layer and the inelastic fibre or filament layer, which consists of endless fibres or microfibres of finite length, are then fused or glued together at the spaced apart connection points, are then strained jointly into the vicinity of the breaking elongation of the fibres or filaments of the inelastic fibre or filament layer and finally are again destressed.

14. Method according to Claim 13, characterized in that the rubber-elastic layer is perforated over its entire area or partly.

15. Method according to Claim 13 or 14, characterized in that, on a laying belt of a melt spinning or melt blowing apparatus, first a fibre or filament layer is produced, that then a rubber-elastic layer produced in a simultaneous or a separate process is supplied, is laid onto the fibre or filament layer conveyed on the laying belt of the melt spinning or melt blowing apparatus and is fused or glued together with the latter at selected connection points to form a multilayer areal structure, and that the areal structure is then strained either transversely to the conveying direction or in the conveying direction or both transversely to the conveying direction and in the conveying direction into the vicinity of the breaking elongation of the fibres or filaments of the inelastic fibre or filament layer, and finally is again destressed.

16. Method according to Claim 15, characterized in that, onto the fibre or filament layer conveyed on the laying belt of the melt spinning or melt blowing apparatus, or onto the rubber-elastic layer provided for the contact with the fibre or filament layer, an adhesive coating which can be activated by the application of pressure or heat is applied before the layers are brought together.

17. Method according to Claim 15 or 16, characterized in that the connection of the rubber-elastic layer to the inelastic fibre or filament layer at the selected connection points is carried out by fusing or activating an adhesive coating by application of pressure utilizing the residual heat resulting from the manufacturing processes of the rubber-elastic layer and/or of the inelastic fibre or filament layer.

18. Method according to one or more of Claims 13 to 17, characterized in that the inelastic fibre or filament layer and the rubber-elastic layer are jointly strained to between 100% and 250% of their initial length.

## Revendications

1. Panneau superficiel élastique multicouches comportant au moins une couche en gomme élastique formant un film homogène ou une feuille homogène, et au moins une couche de fibres ou de filaments non élastique liée à la couche élastique en des endroits de liaison distants les uns des autres, qui forme, à l'état détendu ou partiellement détendu de la couche en gomme élastique, des plis entre les endroits de liaison et qui, à l'état complètement tendu de la couche en gomme élastique, est mis à plat, caractérisé en ce que la couche non élastique en fibres ou en filaments se compose d'une matière initialement plate non étirée ou partiellement étirée en fibres continues ou en microfibres finies longues qui, aux endroits de liaison, est fondue ou collée avec la couche de gomme élastique détendue, et en ce que le panneau est allongé jusqu'au voisinage de la limite d'allongement à la rupture des fibres ou des filaments.

2. Panneau superficiel élastique multicouches suivant la revendication 1, caractérisé en ce que la couche en gomme élastique est perforée sur toute sa surface.

3. Panneau superficiel élastique multicouches suivant la revendication 1, caractérisé en ce que la couche en gomme élastique est partiellement perforée.

4. Panneau superficiel élastique multicouches suivant la revendication 2 ou 3, caractérisé en ce que la couche en gomme élastique présente, sur toute sa surface ou partiellement sur sa surface, une densité et/ou une largeur des ouvertures de perforation inégales.

5. Panneau superficiel élastique multicouches suivant une ou plusieurs des revendications 1 à 4, caractérisé en ce que la couche non élastique en fibres ou filaments est formée de fibres continues.

6. Panneau superficiel élastique multicouches suivant une ou plusieurs des revendications 1 à 4, caractérisé en ce que la couche non élastique en fibres ou filaments est formée de longues microfibres finies dont la longueur est égale à plusieurs distances entre deux endroits de liaison immédiatement voisins et dont le poids surfacique est dans la gamme allant de préférence de 2 à 10 g/m².

7. Panneau superficiel élastique multicouches suivant une ou plusieurs des revendications 1 à 4, caractérisé en ce que la couche non élastique en fibres ou filaments est formée de longues fibres synthétiques d'une longueur allant de 20 à 100 mm.

8. Panneau superficiel élastique multicouches suivant une ou plusieurs des revendications 1 à 7, caractérisé en ce que la couche en gomme élastique et/ou la couche non élastique de fibres ou de filaments porte une couche de colle adhésive pouvant être activée par compression ou par échauffement, qui, aux endroits de liaison distants les uns des autres, crée une adhérence entre la couche élastique et la couche non élastique de fibres ou de filaments.

9. Panneau superficiel élastique multicouches suivant la revendication 8, caractérisé en ce que la couche de colle adhésive présente une partie à structure fibreuse.

10. Panneau superficiel élastique multicouches suivant une ou plusieurs des revendications 1 à 9, caractérisé en ce que les propriétés élastiques sont prévues à une ou deux dimensions.

11. Panneau superficiel élastique multicouches suivant la revendication 10, caractérisé en ce que, pour un panneau superficiel en forme de bande avec propriétés élastiques prévues à une dimension, l'élasticité est orientée perpendiculairement à la direction de la bande.

12. Panneau superficiel élastique multicouches suivant une ou plusieurs des revendications 1 à 11, caractérisé en ce que la couche non élastique de fibres ou de filaments présente un allongement permanent d'au moins 150 % par rapport à la longueur initiale et que la couche élastique présente, après un premier allongement, un allongement permanent de 20 % au maximum et un allongement à la rupture d'au moins 150 %, de préférence compris entre 250 et 500 %, par rapport à la longueur initiale.

13. Procédé de fabrication d'un panneau superficiel élastique multicouches en au moins une couche de gomme élastique formée d'un film homogène ou d'une feuille homogène, et au moins un couche non élastique en fibres ou en filaments liée avec la couche élastique en des endroits de liaison distants les uns des autres, la couche de gomme élastique à l'état détendu et la couche non élastique de fibres ou de filaments étant superposées d'abord à plat, caractérisé en ce que la couche élastique et la couche non élastique de fibres ou de filaments, qui consiste en fibres continues ou en longues microfibres finies, sont ensuite fondues ou collées aux endroits de liaison distants les uns des autres, puis sont étirées ensemble ;usqu'au voisinage de la limite d'allongement à la rupture des fibres ou des filaments, et sont, enfin, à nouveau détendues.

14. Procédé suivant la revendication 13, caractérisé en ce que la couche de gomme élastique est perforée sur tout ou partie de sa surface.

15. Procédé suivant la revendication 13 ou 14, caractérisé en ce que, sur une bande de pose d'une installation de filature ou de soufflage en fusion, est fabriquée d'abord une couche de fibres ou de filaments, en ce qu'ensuite est réalisée une couche de gomme élastique fabriquée dans un procédé simultané ou indépendant, sur laquelle est posée la couche de fibres ou de filaments transportée sur la bande de pose d'une installation de filature ou de soufflage en fusion, et fondue ou collée avec celle-ci aux endroits de liaison choisis en un panneau superficiel multicouches, et en ce que le panneau superficiel est ensuite soit perpendiculairement à la direction de transport, soit dans la direction de transport, soit perpendiculairement à la direction de transport et dans la direction de transport, allongé jusqu'au voisinage de la limite d'allongement à la rupture des fibres ou des filaments et, enfin, à nouveau détendu.

16. Procédé suivant la revendication 15, caractérisé en ce que, sur la couche de fibres ou de filaments transportée sur la bande de pose d'une installation de filature ou de soufflage en fusion, ou sur la couche de gomme élastique prévue pour le contact avec la couche de fibres ou de filaments, avant que se touchent les couches, on met dessus une couche de colle adhésive pouvant être activée par compression ou échauffement.

17. Procédé suivant la revendication 15 ou 16, caractérisé en ce que la liaison entre la couche en gomme élastique et la couche non élastique de fibres ou de filaments, en des endroits de liaison choisis, est préparée par fusion ou activation d'une couche de colle par compression, en utilisant la chaleur résiduelle engendrée par les procédés de fabrication de la couche de gomme élastique et/ou de la couche non élastique de fibres ou de filaments.

18. Procédé suivant une ou plusieurs des revendications 13 à 17, caractérisé en ce que la couche non élastique de fibres ou de filaments et la couche de gomme élastique sont allongées ensemble jusqu'entre 100 % et 250 % de leur longueur initiale.
